Europäisches Patentamt

European Patent Office

Office européen des brevets

(11) Veröffentlichungsnummer: **0 322 728**
**A1**

(12) **EUROPÄISCHE PATENTANMELDUNG**

(21) Anmeldenummer: 88121362.3

(22) Anmeldetag: 21.12.88

(51) Int. Cl.⁴: **B65D 85/60 , B65D 81/38 ,
B65D 1/36**

(30) Priorität: **29.12.87 DE 3744371**

(43) Veröffentlichungstag der Anmeldung:
**05.07.89 Patentblatt 89/27**

(84) Benannte Vertragsstaaten:
**AT BE CH DE ES FR GB GR IT LI LU NL SE**

(71) Anmelder: **Jacobs Suchard AG
Seefeldquai 17
CH-8008 Zürich(CH)**

(72) Erfinder: **Kühn, Michael
Amalienstrasse 63
D-2870 Delmenhorst(DE)**

(74) Vertreter: **Bolte, Erich, Dipl.-Ing. et al
c/o Meissner, Bolte & Partner Patentanwälte
Hollerallee 73
D-2800 Bremen 1(DE)**

(54) **Verpackung für Süsswaren.**

(57) Süßwaren, insbesondere Pralinen, sind empfindlich gegenüber Wärmeeinwirkungen. Die bisher üblichen Verpackungen für derartige Süßwaren sind
ohne ausreichende Wärmeisolierung.

Die vorliegende Verpackung (10) für Pralinen
(11) oder dergleichen besteht aus einem Isolierbehälter (12), der in einem als Faltkarton ausgebildeten
Außenbehälter (37) Aufnahme findet. Der Isolierbehälter (12) kann aus wärmeisolierendem Material bestehen oder aus im Abstand voneinander angeordneten dünnen Wandungen, die wärmeisolierende Luftkammeren einschließen. Ein Verschlußdeckel (35) ist
ebenfalls wärmeisolierend ausgebildet.

FIG. 4

EP 0 322 728 A1

## Verpackung für Süßwaren

Die Erfindung betrifft eine Verpackung für Süßwaren, insbesondere Pralinen, mit einem Behälter und einem Einsatzbehälter, der Nester (Vertiefungen) zur Aufnahme der Süßwaren aufweist und mit einem Deckel.

Verpackungen für Pralinen bestehen überwiegend aus dünnen Karton mit einem Einsatz aus tiefgezogener Kunststoffolie zur Bildung einzelner Nester für die Aufnahme der Pralinen. Diese Verpackung bietet keinen nennenswerten Schutz der empfindlichen Süßwaren gegenüber Temperaturschwankungen, insbesondere gegenüber Wärmeeinwirkungen.

Der Erfindung liegt die Aufgabe zugrunde, eine Verpackung für empfindliche Süßwaren, insbesondere Pralinen, zu schaffen, die im Aufbau und in der Handhabung einfach ist, gleichwohl aber einen beträchtlich höheren Schutz gegenüber Temperatureinwirkungen bietet.

Zur Lösung dieser Aufgabe ist die erfindungsgemäße Verpacking dadurch gekennzeichnet, daß der Behälter (Isolierbehälter) und der Deckel wärmeisolierend ausgebildet sind bzw. aus wärmeisolierendem Material, insbesondere Hartschaum (Polystyrol) bestehen.

Wenn man einen Behälter aus Polystyrol, einem anderen Hartschaumstoff oder auch einem enstsprechend isolierenden Naturstoff (gepreßtes Stroh) verwendet, so wird eine optimale Isolierung der süßwaren gegenüber Wärmeeinwirkung erzielt. Die einzelnen Süßwaren selbst finden Aufnahme in einem durch Tiefziehen einer dichten Folie geformten Einsatzbehälter mit Nestern für die Pralinen oder dergleichen. Der betreffende Einsatzbehälter ist in Form und Größe auf den (Isolier-)Behälter abgestimmt, derart, daß der dünnwandige Einsatzbehälter wie eine Auskleidung des Behälters aus Schaumstoff wirkt. Die Folie des Einsatzbehälters (Polypropylen) ist weitgehend dampf- bzw. feuchtigkeitsdicht.

Gemäß einer vorteilhaften Alternativausführung besteht der Isolierbehälter und gegebenenfalls der Deckel aus wenigstens zwei im Abstand voneinander angeordneten Wänden (innere Schale, äußere Schale), zwischen denen wärmeisolierende Luftkammern gebildet sind. Bei dieser materialsparenden Ausführung der Verpackung werden als Isolierbehälter zwei durch Tiefziehen gestaltete Schalen ineinander gesetzt, derart, daß Wärmeisolierung durch eingeschlossene Luftkammeren entsteht. Vorzugsweise ist die innere Schale zugleich der Einsatzbehälter, der Nester zur Aufnahme der Pralinen oder dergleichen bildet.

Der Isolierbehälter ist nach einem weiteren Merkmal der Erfindung in einem Außenbehälter angeordnet, vorzugsweise in einem Faltkarton. Soweit dieser einem klappbaren Kartondeckel aufweist, kann der Verschlußdeckel des Isolierbehälters an der Innenseite des Kartondeckels befestigt sein, und zwar in passender Relativstellung zur Öffnung des Isolierbehälters.

Zur weiteren Verbesserung der Wärmeisolierung ist der Isolierbehälter, insbesondere in der Ausführung aus tiefgezogenen Schalen, mit Abstand von den Wänden des Außenbehälters (Faltkarton) in diesem angeordnet, so daß eine zusätzliche Isolierwirkung durch weitere Luftkammern erzielt wird.

Der Isolierbehälter ist erfindungsgemäß durch eine obere, aufgesiegelte und abziehbare Verschlußfolie aus oder unter Verwendung von Metall (Aluminium) dicht verschlossen. Die Verschlußfolie ist mit einer Grifflasche zum Abziehen beim Öffnen der Verpackung versehen.

Weitere Merkmale der Erfindung betreffen die konstruktive Ausgestaltung von Isolierbehälter und Einsatzbehälter.

Ein Ausführungsbeispiel der Erfindung wird nachfolgend anhand der Zeichnungen erläutert. Es zeigt:

Fig. 1 eine Verpackung für Pralinen oder andere Süßwaren im Längsschnitt,

Fig. 2 eine Draufsicht auf die Verpackung gemäß Fig. 1 bei teilweise beseitigter Verschlußfolie,

Fig. 3 eine Packungseinheit mit zwei Verpackungen in Seitenansicht bzw. im Vertikalschnitt,

Fig. 4 eine weitere bevorzugte Ausführungsform einer Verpackung im Querschnitt.

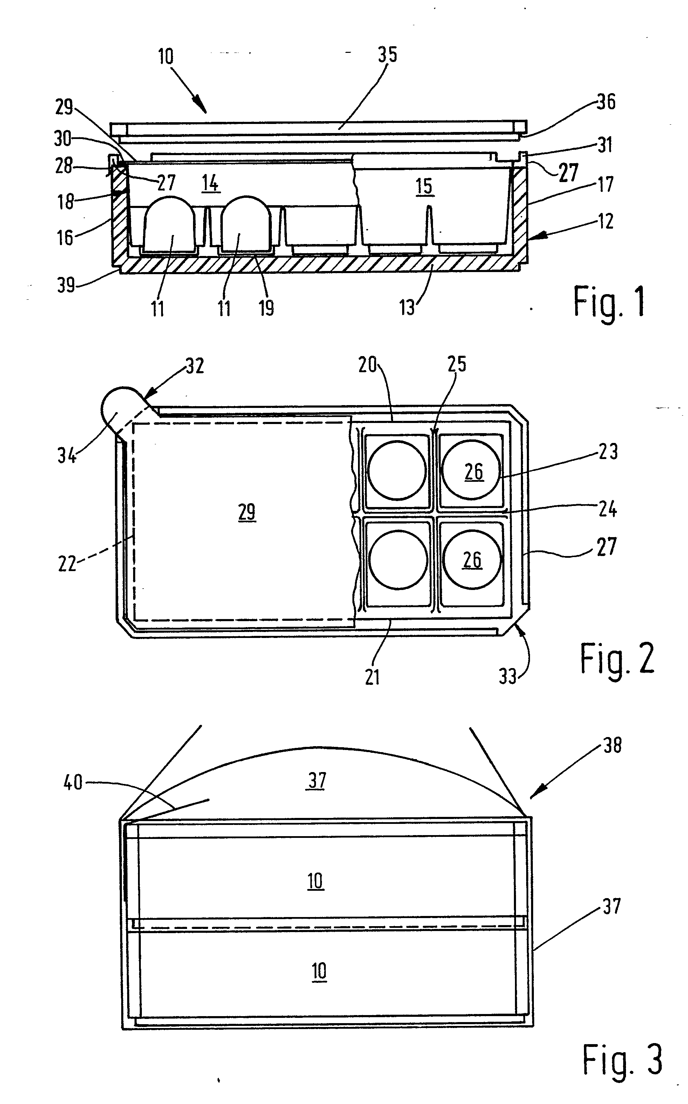

Die in Fig. 1 und 2 gezeigte Verpackung 10 ist besonders vorteilhaft für die Aufnahme von Pralinen 11 oder anderen empfindlichen Süßigkeiten geeignet. Die Verpackung 10 besteht aus einem im vorliegenden Falle rechteckigen Isolierbehälter 12 mit Bodenwand 13, Längswänden 14, 15 und Seitenwänden 16, 17. Der Isolierbehälter 12 ist verhältnismäßig dickwandig und besteht aus einem Werkstoff mit besonderen Isoliereigenschaften, insbesondere aus Hartschaum, wie Polystyrol. Der Isolierbehälter 12 kann als eine Werkstück durch Ausschäumen in einer entsprechenden Form hergestellt sein. Aufrechte Ecken bzw. Kanten des Isolierbehälters 12 sind im vorliegenden Falle abgeschrägt, so daß ein insgesamt achteckiger Behälter gegeben ist.

In dem Isolierbehälter 12 befindet sich ein Einsatzbehälter 18 aus einer verhältnismäßig dünnen, durch Tiefziehen geformten Folie, vorzugsweise aus Polypropylen. Der Einsatzbehälter 18 besteht ebenfalls aus Bodenwand 19, Längswänden 20 und 21 sowie Seitenwänden 22 und 23. Im Bereich der Bodenwand 19 sind Längsstege 24 und Querstege 25 durch die Folie eingeformt unter Bildung von Nestern 26 zur Aufnahme jeweils einer Praline 11.

Der Einsatzbehälter 18 sitzt passend in dem Isolierbehälter 12. Bodenwand 19, Längswände 20 und 21 sowie Seitenwände 22 und 23 liegen unmittelbar an der korrespondierenden Wänden des Isolierbehälters 12 an.

Im Bereich des oberen, freien Randes des Isolierbehälters 12 ist der Einsatzbehälter 18 mit einem ringsherum laufenden, angeformten Kappenrand 27 versehen, der den oberen Rand des Isolierbehälters 12 U-förmig umschließt, derart, daß sich ein Außenflansch 28 des Einsatzbehälters 18 ringsherum an der Außenseite des Isolierbehälters 12 erstreckt. Dessen oberer Rand ist demnach vollständig durch die Folie des Einsatzbehälters 18 eingefaßt.

Vor Ingebrauchnahme der Verpackung ist dessen obere Öffnung verschlossen durch eine aus Metall, insbesondere Aluminium, bestehende Verschlußfolie 29. Diese ist ringsherum auf den oberen Rand des Isolierbehälters 12 bzw. des Einsatzbehälters 18 aufgesiegelt. Die Verbindung zwischen Verschlußfolie und der Folie des Einsatzbehälters 18 ist als Peelsiegelung 30 ausgebildet. Die dichte Verbindung kann durch Abziehen der Verschlußfolie 29 beseitigt werden.

Der Kappenrand 27 des Einsatzbehälters 18 ist zur Aufnahme der Verschlußfolie 29 in besonderer Weise ausgebildet, nämlich mit einem außenliegenden, ringsherumlaufenden, angeformten Absatz 31. Innerhalb dieser Erhöhung erstreckt sich die Verschlußfolie 29.

Im Bereich wenigstens einer Ecke, im vorliegenden Fall im Bereich zweier einander gegenüberliegender Ecken 32 und 33, ist der im übrigen durchgehend verlaufende Absatz 31 unterbrochen. Hier erstreckt sich jeweils eine Grifflasche 34 der Verschlußfolie 29 zum Abziehen derselben.

Zur Vervollständigung der Wärmeisolierung der Verpackung 10 ist dieser ein Verschlußdeckel 35 zugeordnet, dieser besteht aus einem plattenförmigen Stück aus Hartschaumstoff, insbesondere Polystyrol. Am äußeren Rand ist der Verschlußdeckel 35 ringsherum mit einem absatzförmigen Rücksprung 36 versehen. Dieser korrespondiert mit dem Absatz 31 des Einsatzbehälters 18. Der Verschlußdeckel 35 kann mit dem Rücksprung 36 formschlüssig in den durch den Absatz 31 umschlossenen Bereich eingesetzt werden, wodurch eine gegen Querverschiebungen gesicherte Lage des Verschlußdeckels 35 auf dem Isolierbehälter 12 bzw. dem Einsatzbehälter 18 geschaffen wird.

Wie aus Fig. 3 ersichtlich, werden zweckmäßigerweise mehrere, insbesondere zwei Verpackungen 10 der beschriebenen Art übereinander in einem gemeinsamen Außenbehälter 37 aus Karton oder einem anderen geeigneten Werkstoff passend angeordnet. Der Außenbehälter 37 bildet mit den mehreren Verpackungen 10 eine Verpackungseinheit 38. Diese kann demnach in Teilportionen in Gebrauch genommen werden, wobei die verbleibenden Verpackungen 10 weiterhin in der isolierenden Verschlußstellung bleiben.

Zur formschlüssigen Stapelung der Packungen 10 übereinander ist die Bodenwand 13 des Isolierbehälters 12 ringsherum mit einem Rücksprung 39 versehen, wie der Verschlußdeckel 35. Dadurch kann eine obere Verpackung 10 mit der Bodenwand 13 formschlüssig auf eine untere Verpackung aufgesetzt werden. Für die gesamte Verpackungseinheit ist dabei nur ein gemeinsamer Verschlußdeckel 35 erforderlich, der auf die jeweils obere Verpackung 10 aufgesetzt wird. Für die unteren Verpackungen wirkt die Bodenwand 13 als isolierender oberer Abschluß. Der Verschlußdeckel 35 wird zweckmäßigerweise nach Ingebrauchnahme einer Verpackung wieder auf diese aufgesetzt zur Erhaltung einer wärmeisolierenden Wirkung.

Der Außenbehälter 37 kann als Faltschachtel oder in anderer geeigneter Weise ausgebildet sein. Für die erleichterte Entnahme der oberen Verpackung 10 aus dem Außenbehälter 37 ist eine Aushebelasche 40 seitlich an der oberen Verpackung 10, zum Beispiel an dessen Seitenwand 16, befestigt. Ein freier Bereich der Aushebelasche 40 kann erfaßt werden zum Hochziehen der oberen Verpackung 10.

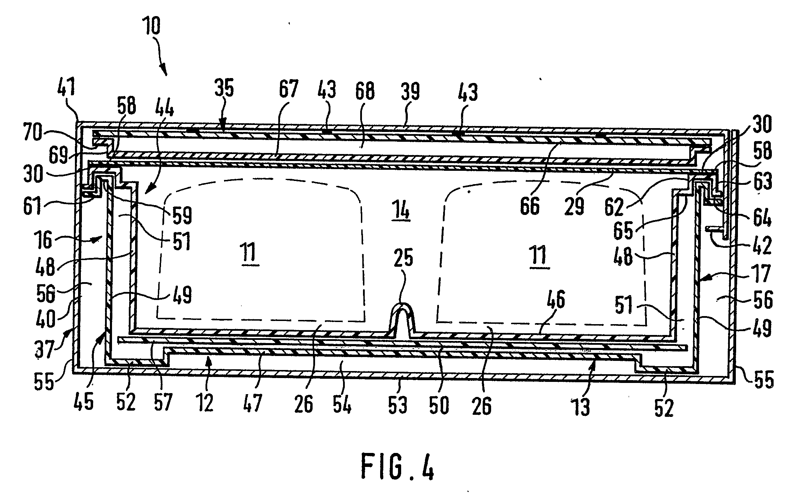

Bei dem in Fig. 4 gezeigten, bevorzugten Alternativbeispiel der Erfindung besteht die Verpackung für Pralinen 11 oder dergleichen ebenfalls aus einem Isolierbehälter 12 und einem dünnwandigen Außenbehälter 37, nämlich einem Faltkarton. Dieser ist jedoch in Abweichung von dem vorstehend beschriebenen Ausführungsbeispiel so ausgebildet, daß ein sich über die volle Oberseite des Außenbehälters 37 erstreckender Kartondeckel 39 an einer Seite, nämlich an einer Kartonrückwand 40 schwenkbar über eine Faltkante 41 angelenkt ist. Hierzu gegenüberliegend wird der Kartondeckel 39 mit einer Stecklasche 42 verankert. Bei dieser Ausführungsform ist der wärmeisolierend ausgebildete Verschlußdeckel 35 an der Innenseite des Kartondeckels 39 befestigt, nämlich durch Leimpunkte 43. Der Verschlußdeckel 35 ist dabei exakt auf die Öffnung des Isolierbehälters 12 ausgerichtet.

Isolierbehälter 12 und Verschlußdeckel 35 sind bei diesem Ausführungsbeispiel so ausgebildet, daß die Wärmeisolierung durch Luftkammern, also (geschlossene) Hohlräume bewirkt wird. Zu diesem Zweck besteht der Isolierbehälter 12 aus mehreren, nämlich zwei im Abstand voneinander angeordneten Wandungsteilen. Diese sind als durch Tiefziehen geformte, sich jeweils über Boden- und Seitenwände erstreckende Schalen ausgebildet, nämlich als innere Schale 44 und äußere Schale 45. Jede dieser Schalen 44, 45 aus einer Kunststoffolie, insbesondere Polypropylen, bildet eine Bodenwand 46 bzw. 47 und Seitenwände 48 bzw. 49. Zwischen den benachbarten Bodenwänden 46 und 47 wird eine bodenseitige Luftkammer 50 gebildet, ebenso eine seitliche Bodenkammer 51 zwischen den Seitenwänden 48 und 49. Die äußere Bodenwand 47 ist darüber hinaus mit eingeformten Vorsprüngen 42 und entsprechenden Vertiefungen versehen, erstere zur Abstützung des Isolierbehälters 12 auf einem Kartonboden 53 des Außenbehälters 37. Auf diese Weise werden Luftkammern 54 auch im bodenseitigen Bereich zwischen dem Isolierbehälter 12 und dem Außenbehälter 37 gebildet. Die Seitenwände 49 sind durch entsprechende Abstandhalter ebenfalls mit Abstand von Kartonseitenwänden 55 angeordnet, so daß auch hier Luftkammern 56 entstehen.

Die innere Schale 44 bildet bei diesem Ausführungsbeispiel zugleich den Einsatzbehälter. Durch entsprechende (Tiefzieh-)Formung der inneren Schale 44 mit Längsstegen 25 entstehen Nester 26 zur Aufnahme der Pralinen 11.

Zwischen der inneren Bodenwand 46 und der äußeren Bodenwand 47 des Isolierbehälters 12 ist bei dem vorliegenden Ausführungsbeispiel ein weiteres wärmeisolierendes Organ angeordnet, nämlich eine Isolierfolie 57. Diese erstreckt sich innerhalb der bodenseitigen Luftkammer 54. Die Isolierfolie 57 besteht aus oder enthält eine Metallschicht, vorzugsweise aus Aluminium, die eine Wärmeübertragung durch Strahlungswärme wirksam verhindert.

Der obere Rand der beiden Schalen 44, 45 ist in besonderer Weise ausgebildet, zum einen zur formschlüssigen Verbindung der Schalen 44, 45 miteinander und zum anderen zur Schaffung eines oberen, ringsherum laufenden Siegelrandes 58 zum Anbringen der Verschlußfolie 29 mittels Peelsiegelung 30.

Der obere Rand der äußeren Schale 45 ist mit einer U-förmigen Abkröpfung 59 versehen. Der freie, untere Rand eines Außenflansches 60 ist mit einem quer (horizontal) gerichteten Stützschenkel 61 versehen. Dieser kann als Abstandhalter bzw. Stütze zur Anlage des Isolierbehälters 12 an den Kartonseitenwänden 55 dienen.

Die innere Schale 44 ist mit einer passenden, oberen, ebenfalls U-förmigen Abkröpfung 62 formschlüssig über die Abkröpfung 59 der äußeren Schale 45 gestülpt. Die Verbindung kann in diesem Bereich zusätzlich durch Klebung oder Siegelung gefestigt sein. Ein Außenflansch 63 legt dabei an den Außenflansch 60 der äußeren Schale 45 an und bildet ebenfalls einen (kleineren, kürzeren) Stützschenkel 64.

An der Innenseite der inneren Schale 44 schließt an die Abkröpfung 62 ein nach unten bzw. innen versetzter Absatz 65 an. Dieser bildet einerseits den Abstand der inneren Schale 44 von der äußeren Schale 45. Zum anderen entsteht eine Auflagefläche für den Verschlußdeckel 35 nach Beseitigung der Verschlußfolie 29.

Der Verschlußdeckel 35 ist bei dem vorliegenden Ausführungsbeispiel ebenfalls als Hohlkörper ausgebildet. Eine äußere Deckelwand 66 und eine innere Deckelwand 67 sind im Abstand voneinander angeordnet, so daß zwischen diesen eine Luftkammer 68 gebildet ist. Der Abstand wird dadurch gebildet, daß im vorliegenden Falle die innere Deckelwand 67 am Rand ringsherum einen winkelförmigen Absatz 69 bildet. Ein äußerer Randflansch 70 ist mit der ebenen äußeren Deckelwand 66 verbunden. Der Absatz 69 ist passend zum Absatz 65 des Isolierbehälters 12 dimensioniert, so daß der Verschlußdeckel 35 nach Beseitigung der Verschlußfolie 29 mit dem Absatz 69 in den oberen Bereich des Isolierbehälters 12 eintritt.

## Ansprüche

1. Verpacking für Süßwaren, insbesondere Pralinen, mit einem Behälter und einem Einsatzbehälter, der Nester (Vertiefungen) zur Aufnahme der Süßwaren aufweist und mit einem Deckel, **dadurch gekennzeichnet,** daß der Behälter (Isolierbehälter 12) und der Deckel (Verschlußdeckel 35) wärmeisolierend ausgebildet sind bzw. aus wärmeisolierendem Material, insbesondere Hartschaum (Polystyrol) bestehen.

2. Verpackung nach Anspruch 1, dadurch gekennzeichnet, daß in dem Isolierbehälter (12) passend ein die Nester (26) bildender Einsatzbehälter (18) aus dichter Folie, insbesondere aus Polypropylen, angeordnet ist.

3. Verpackung nach Anspruch 1 oder 2, dadurch gekennzeichnet, daß der Isolierbehälter (12) und gegebenenfalls der Verschlußdeckel (35) aus wenigstens zwei im Abstand voneinander angeordneten Wänden (innere Schale 44, äußere Schale 45) besteht, zwischen denen wärmeisolierende Luftkammern 50, 51 gebildet sind.

4. Verpackung nach Anspruch 1 sowie einem oder mehreren der weiteren Ansprüche, dadurch gekennzeichnet, daß der Isolierbehälter (12) in einem Außenbehälter 37, insbesondere einem Faltkarton, angeordnet ist.

5. Verpackung nach Anspruch 4 sowie einem oder mehreren der weiteren Ansprüche, dadurch gekennzeichnet, daß der Isolierbehälter (12), insbesondere in der Ausführung mit innerer Schale (44) und äußerer Schale (45), gegenüber den Wänden des Außenbehälters (37) durch Abstandsorgane mit Abstand gehalten ist, derart, daß zwischen dem Isolierbehälter (12) und dem Außenbehälter (37) Luftkammern (54, 56) gebildet sind.

6. Verpackung nach Anspruch 3 sowie einem oder mehreren der weiteren Ansprüche, dadurch gekennzeichnet, daß die innere Schale (44) zugleich als Einsatzbehälter ausgebildet ist mit längsstegen (25) zur Bildung von Nestern (26).

7. Verpackung nach Anspruch 3 sowie einem oder mehreren der weiteren Ansprüche, dadurch gekennzeichnet, daß innere Schale (44) und äußere Schale (45) im Bereich eines oberen, ringsherum verlaufenden Randes miteinander verbunden sind, insbesondere durch eingeformte, winkelförmige bzw. U-förmige Abkröpfungen (59, 62), die formschlüssig übereinander gestülpt sind.

8. Verpackung nach Anspruch 1 sowie einem oder mehreren der weiteren Ansprüche, dadurch gekennzeichnet, daß der isolierbehälter (12), insbesondere dessen innere Schale (44) einen innenseitigen Absatz (31) bzw. (65) bildet zur formschlüssigen, passenden Aufnahme des Verschlußdeckels (35), der vorzugsweise ebenfalls mit einem Rücksprung (36) bzw. Absatz (69) ausgebildet ist.

9. Verpackung nach Anspruch 1 sowie einem oder mehreren der weiteren Ansprüche, dadurch gekennzeichnet, daß der Verschlußdeckel (35) als Hohlkörper ausgebildet ist mit einer wärmeisolierenden Luftkammer (68), vorzugsweise durch randseitiges Verbinden (Versiegeln) von zwei aus Kunststoffolie bestehenden Deckelwänden (66, 67), von denen die innere Deckelwand (67) am Rand einen winkelförmigen Absatz (69) bildet.

10. Verpackung nach Anspruch 1 sowie einem oder mehreren der weiteren Ansprüche, dadurch gekennzeichnet, daß bei einem Außenbehälter (37) als Faltkarton oder dergleichen mit einem sich über die gesamte Oberseite erstreckenden Kartondeckel (39) der Verschlußdeckel (35) an der Innenseite des Kartondeckels (39) befestigt (festgeklebt) ist und zwar passend zu der Öffnung des Isolierbehälters (12).

11. Verpackung nach Anspruch 1 sowie einem oder mehreren der weiteren Ansprüche, dadurch gekennzeichnet, daß innerhalb des Isolierbehälters (12) ein gesonderter, aus einer tiefgezogenen Folie bestehender Einsatzbehälter (18) zur Bildung der Nester (26) angeordnet ist, dessen freier oberer Rand durch entsprechende Verformung sich unter Bildung eines Kappenrandes (27) über den oberen Rand des Isolierbehälters erstreckt.

12. Verpackung nach Anspruch 1 sowie einem oder mehreren der weiteren Ansprüche, dadurch gekennzeichnet, daß der Isolierbehälter (12) mit einer in dessen Öffnung abdeckenden Verschlußfolie (29) aus oder unter Verwendung einer Metallschicht versehen ist, die mit ihrem Rand abziehbar (Peelsiegelung 30) am oberen Rand des Isolierbehälters (12) bzw. am Kappenrand (27) des Einsatzbehälters (18) dicht befestigt ist.

13. Verpackung nach Anspruch 12, dadurch gekennzeichnet, daß die Verschlußfolie (29) wenigstens eine im Bereich einer Ecke (32, 33) gebildete Grifflasche (34) aufweist.

Fig. 1

Fig. 2

Fig. 3

FIG.4

EP 0 322 728 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 711 427 (J. GUILLOU) <br> * Figur 1; Seite 5, Zeilen 26-29; Seite 8, Zeilen 4-15 * <br> --- | 1,4 | B 65 D 85/60 <br> B 65 D 81/38 <br> B 65 D 1/36 |
| Y | NL-A-7 102 858 (WEERTER KUNSTSTOFFENFABRIEKEN N.V.) <br> * Figuren 1,2; Seite 2, Zeilen 30-36; Seite 3, Zeilen 27-28 * | 1,4 | |
| A | --- | 3,6 | |
| Y | FR-E- 86 165 (TURREL) <br> * Figur 6; Seite 1, Absatz 1 * <br> --- | 4 | |
| P,A | FR-A-2 604 981 (COMPAGNIE ORIS INDUSTRIE S.A.) <br> * Figur 1; Seite 2, Zeilen 9-15; Seite 2, Zeile 25 - Seite 3, Zeile 5 * <br> --- | 4,5,10 | |
| A | DE-A-2 906 990 (OHLER EISENWERK) <br> * Figur 1; Seite 8, Zeilen 19-24; Seite 9, Zeilen 1-14, Seite 10, Zeilen 18-25 * <br> ----- | 1,2,8 | RECHERCHIERTE SACHGEBIETE (Int. Cl.4) <br><br> B 65 D |

Der vorliegende Recherchenbericht wurde für alle Patentansprüche erstellt

| Recherchenort | Abschlußdatum der Recherche | Prüfer |
|---|---|---|
| DEN HAAG | 03-04-1989 | PERNICE,C. |